# EUROPEAN PATENT APPLICATION

(11) **EP 1 087 603 A2**
(43) Date of publication of application: **28.03.2001**
(21) Application number: 00305622.3
(22) Date of filing: 04.07.2000
(51) Int. Cl.: H04M 17/00

(54) **Method and apparatus for managing debit card/prepaid card services in a telephone network**

(30) Priority: 23.07.1999 US 359598
(71) Applicant: Nortel Networks Limited, Montreal, Quebec H2Y 3Y4 (CA)
(72) Inventor: Osterhout, Gregory T., Coppell, Texas 75019 (US); Just, Joel D., Plano, TX 75013 (US); Ingle III, Jack R., Allen, TX 75013 (US)
(74) Representative: Christophers, Rachel Alder

(57) **Abstract**

A Debit Card and Prepaid card Servicing (DPCS) function manages debit card/prepaid card services. The DPCS function is implemented in Signal Switching Points (SSPs) and a Service Control Points (SCP) in the telephone network. A subscriber initiates a debit card/prepaid card transaction via a switch by dialing a telephone number corresponding to the service provider. The switch routes a message to the SCP and provides pertinent debit card/prepaid card information to the SCP. Based upon a remaining value of the debit card/prepaid card, the SCP generates a timeout timer value. The SCP then sends a message to the switch authorizing the switch to route the call, the message including the timeout timer value. If the switch successfully completes the call, it sets a timer corresponding to the timeout timer value. If the timer expires, the switch sends a message to the SCP, which includes the call duration. The SCP deducts the value of the call (based upon the call duration) from the debit card/prepaid card and then may direct the switch to disconnect or continue the call (with additional payment). When the call is disconnected prior to timer expiration, the switch reports the duration of the call to the SCP and the SCP deducts the value of the call from the debit card/prepaid card.

## Description

### BACKGROUND

### 1. Technical Field

The present invention relates generally to telephone networks; and more particularly to managing debit card and prepaid card services in such a telephone network.

### 2. Related Art

The structure of modern telephone networks often includes a traffic network and a coupled signaling network. The traffic network includes a plurality of switches interconnected by traffic handling trunks. Many of these switches serve as central office switches that couple to a plurality of terminals as well as to other of the plurality of switches. Other switches serve to interconnect the traffic handling trunks, to interface between networks of different carriers and to perform other switching services. The signaling network interfaces with the traffic network to perform call routing and management functions. The structure and operation of such a modern telephone network is generally known.

Debit card and prepaid card phone services have become popular over the past few years as a method for selling long distance service. In a prepaid card transaction, a user purchases a prepaid card from a retailer or other store, the prepaid card typically authorized for a monetary value (e.g., $10, $25, etc.). The prepaid card looks like credit card and includes magnetically encoded information uniquely identifying the prepaid card. This magnetically encoded information may also indicate the initial value of the prepaid card. The prepaid card is associated with a particular servicing entity and must be used through the servicing entity. In using the prepaid card, the purchaser places the prepaid card into a magnetic card reader and dials a toll-free number corresponding to the servicing entity. The toll-free number is employed by the telephone network to route the call to a dedicated "toll box" operated by the servicing entity. The toll box receives the prepaid card information, validates the prepaid card and, if the prepaid card is valid, the toll box then initiates routing of the call to the called number. Upon successful routing, the call is completed to the call number and the call is serviced.

While servicing the call, the toll box tracks the duration of the call. When the call is completed, the toll box deducts the cost of the call from the value of the prepaid card, the value of the card tracked in a database contained on the toll box. If the cost of the call will exceed the remaining value of the prepaid card, the toll box may disconnect the call or send the caller to a resource asking for an alternate payment method. If the customer fails to arrange for other payment, the toll box will disconnect the call.

A similar technique is used for debit card long distance services. In a debit card transaction, a user has an established account with the long distance service provider and has made available an account from which the service provider may debit money for long distance services. When a user places a long distance call, the call is also routed through the toll box. The debit card allows the toll box to identify the account so that a debit may be made based upon the cost of the call. The toll box services the call for the user if the balance of the account is sufficient. With the debit card service as well, the toll box may interrupt the call if the user's account reaches zero and send the caller to a resource, requesting additional payment.

The cost of acquiring and operating the toll box is great. Thus, any revenues produced by the debit card/prepaid call services must be offset by the cost of acquiring and operating the toll box. Further, because the toll box has limited routing capacity, the toll box may service only a limited number of calls at any time. Moreover, because the toll box requires routing from a local exchange carrier, if it is required to service local calls, it must service local calls in the same manner as it services long distance calls. Thus, the debit card/prepaid services cannot adequately service local calls.

Thus, there exists a need in the art for an apparatus and method that may be used for managing debit card and prepaid card services without the difficulties and shortcomings of the prior methodologies.

### SUMMARY OF THE INVENTION

Thus, to overcome the shortcomings of the prior debit card/prepaid card systems, among other shortcomings, a telephone network constructed according to the present invention includes a Debit Card and Prepaid card Servicing (DPCS) function that manages debit card/prepaid card services. The DPCS function is implemented in Service Switching Points (SSPs) and Service Control Points (SCP) in the telephone network. The DPCS function is also partially implemented in the coupled switches. The DPCS function allows the SCP to manage and oversee debit card/prepaid card services without requiring a separate toll box. Such operations are possible by causing a servicing switch to set Event Detection Points (EDPs) in debit card/prepaid card calls. Messages provided by the servicing switch to the SCP allow the SCP to oversee and manage the debit card/prepaid card services.

In an operation according to the present invention, a subscriber initiates a debit card/prepaid card transaction via a switch. In initiating the transaction, the subscriber dials a telephone number (e.g., toll free number, local access number, etc.) corresponding to the service provider. The switch routes a message to the SCP and provides pertinent debit card/prepaid card information to the SCP. The SCP determines whether the debit card/prepaid card is valid and what is its remaining value. Based upon the remaining value, the SCP generates a timeout timer value. The SCP then sends a message to the switch authorizing the switch to route the call to a called party. In the message, the SCP also sends the timeout timer value. If the switch successfully completes the call, it sets a timer corresponding to the timeout timer value.

If the timer expires prior to disconnection of the call, the switch sends a message to the SCP, which includes the call duration. The SCP deducts the value of the call (based upon the call duration) from the debit card/prepaid card and determines whether or not to disconnect the call. If the SCP determines that the call is to be disconnected, the SCP sends a message directing the switch to disconnect the call. If not, the SCP sends a message directing the switch to connect the subscriber to a resource, which allows the subscriber to arrange for additional payment. If the subscriber arranges for additional payment, the SCP directs the switch to continue the call and to reset the timer based upon a new timeout timer value (based upon the additional payment).

In another operation according to the present invention, the timer does not expire prior to disconnection of the call by the subscriber or the called party. When this event occurs, the SSP sends a disconnection message to the SCP, which includes the duration of the call. Upon receiving the disconnect message, the SCP deducts the cost of the call from the balance of the prepaid card or debit card.

Moreover, other aspects of the present invention will become apparent with further reference to the drawings and specification which follow.

The invention provides methods according to Claims 1, 5, 10; a service control point according to Claim 13; a telephone switch according to Claim 16; computer readable media according to Claims 19 and 23; and messages according to Claims 26, 27, 28 and 29.

### BRIEF DESCRIPTION OF THE DRAWINGS

A better understanding of the present invention can be obtained when the following detailed description of the preferred embodiment is considered in conjunction with the following drawings, in which:
FIG. 1 is a block diagram illustrating generally a telephone traffic network and a telephone signaling network that operate according to the present invention;
FIG. 2 is a logic diagram illustrating operation of a telephone network according to the present invention in servicing debit card/prepaid card services;
FIG. 3 is a logic diagram illustrating operation of a telephone network according to the present invention in responding to a timeout event during call servicing;
FIG. 4 is a logic diagram illustrating operation of a telephone network according to the present invention in responding to a disconnect event;
FIG. 5 is a logic diagram illustrating operation of a telephone network according to the present invention in sending a user to an intelligent peripheral after a timeout event has occurred during call servicing;
FIG. 6 is a block diagram illustrating a signaling network element constructed according to the present invention;
FIG. 7 is a block diagram illustrating a telephone switch constructed according to the present invention; and
FIGs. 8 and 9 are message flow diagrams illustrating an example of operation according to the present invention in servicing a debit card/prepaid card call.

### DETAILED DESCRIPTION OF THE DRAWINGS

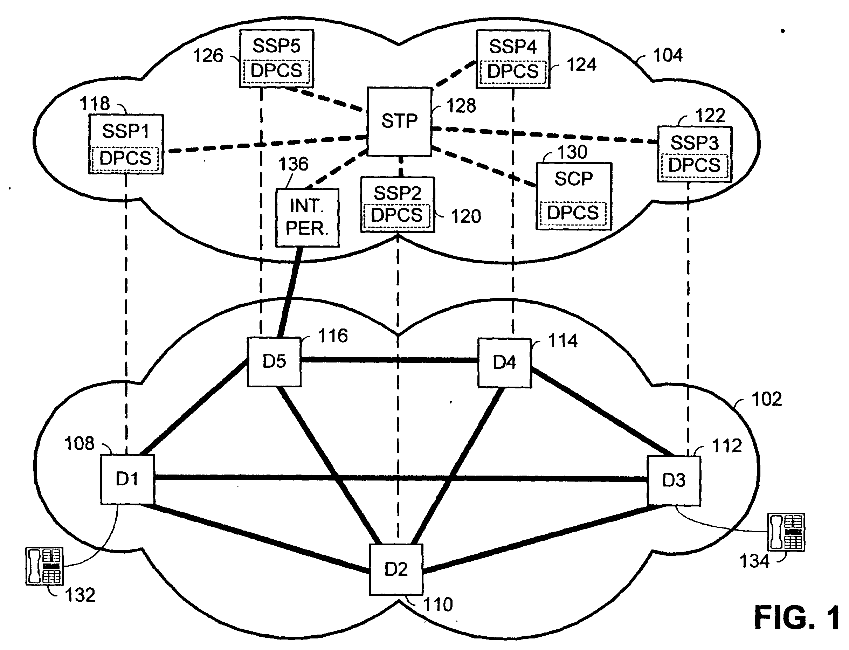

FIG. 1 is a block diagram illustrating generally a telephone traffic network and a telephone signaling network that operate according to the present invention. As is generally known, the construction and operation of telephone networks may be segregated into a traffic network 102 that carries call traffic and the signaling network 104 that provides functions to route calls and to otherwise monitor and manage operation of the traffic network 102. Nortel Networks, as well as other vendors of telephone equipment, support such an architecture and the structure has been standardized (to some extent) to allow such network construction to extend across platforms. A particular standard that has been developed (that may be employed in conjunction with the present invention) is the Common Channel Signaling Number 7 (CCS7) architecture. This type of architecture may be constructed and operated as an Advanced Intelligent Network (AIN).

The traffic network 102 includes a plurality of digital switches 108, 110, 112, 114 and 116, which are also referenced as D1, D2, D3, D4 and D5, respectively. The digital switches 108-116 are interconnected by traffic trunks which carry the calls from digital switch to digital switch as they traverse the traffic network 102. As is shown, however, each digital switch does not intercouple to each other digital switch. The traffic network 102 shown illustrates traffic trunks that couple digital switch D1 108 to D5 116, D3 112 and D2 110. A call routed between D1 108 and D3 112 is routed via the traffic trunk that connects D1 108 and D3 112. However, no direct traffic trunk connects D1 108 to D4 114. Thus, calls routed between D1 108 and D4 114 must be routed via another digital switch.

The digital switches 108-116 are represented as Service Switching Points (SSPs) 118-130, respectively, in the signaling network 104. The SSPs 118-130 therefore serve as entrance points to the signaling network 104 for the digital switches 108-116. As is shown, the SSPs 118-130 each couple to a Signal Transfer Point (STP) 128 that serves as a packet switch within the signaling network 104 to route signals among the elements of the signaling network 104. The structure illustrated is, of course, an example of a structure of a signaling network 104. Coupled to the STP 128 is a Service Control Point (SCP) 130 that serves as a centralized network element in the signaling network architecture. The signaling network elements call upon the SCP 130 to perform functions of the AIN in transaction processing. Also coupled to both the signaling network 104 and the traffic network 102 is an intelligent peripheral 136.

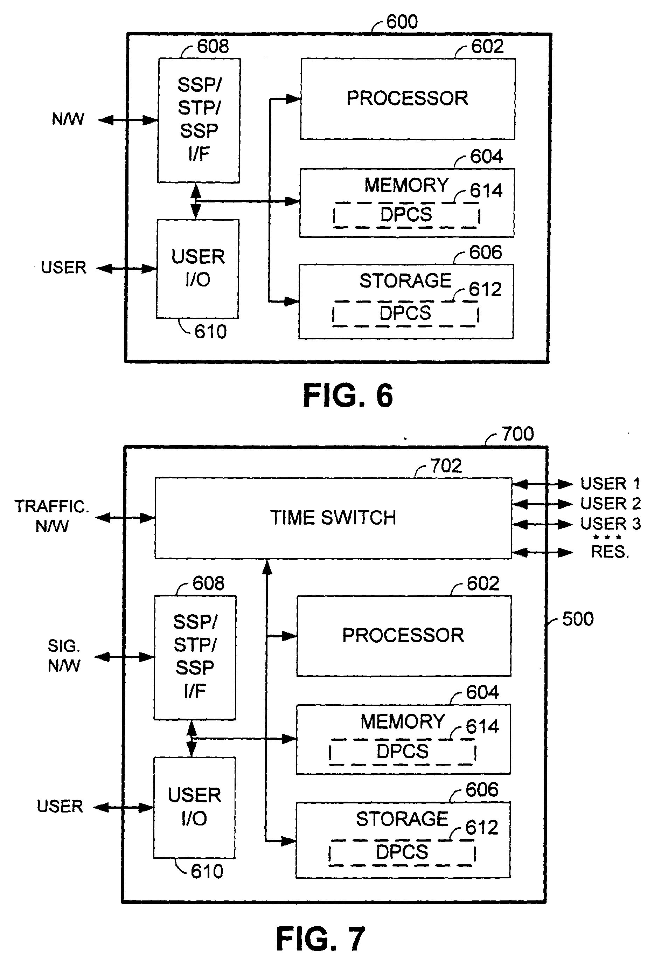

The SCP 130 and the SSPs 118-126 support operations according to the present invention in managing debit card/prepaid card services. Thus, each of the SSPs 118-126 and the SCP 130 include Debit card/Prepaid Card Servicing (DPCS) function components. These DPCS function components may be embodied as software instructions executed by the telephone network components, as hardware elements, or as a combination of software and hardware components. Examples of such structures will be discussed with reference to FIGs. 6 and 7.

In an operation according to the present invention, a user accesses the telephone network via telephone 132. The user desires to place a call to telephone 134 and to pay for the call using a prepaid card. In order to use the prepaid card service, the user dials the telephone number of his or her service provider. Digital switch 108 servicing the call receives the dialed digits and passes the dialed digits to the coupled SSP1 118. The DPCS function present on the SSP1 118 sends a message to the SCP 130, attempting to verify the prepaid card transaction. The SCP 130 (DPCS function running thereupon) determines whether the prepaid card is valid and, if so, directs the SSP1 118 to complete and service the call to the called telephone 134. The SSP1 118 then performs operations and messaging to cause D1 108 to route, connect and service the call via D3 112 to the telephone 134.

When authorizing SSP1 118 to service the call, the SCP 130 also directs the SSP1 118 to arm Event Detection Points for the call. These event detection points include timeout functions and disconnect functions that allow the debit card/prepaid card service to be effectively managed. The timeout function causes the SSP1 118 to issue a timeout message to the SCP 130 after a timeout period has expired when the call is being serviced. This timeout period is typically be set to correspond to the remaining value of the prepaid card (or debit card). However, based upon user preference, the timeout period could be set to correspond to a time period less than the remaining value of the prepaid card.

When a timeout event is reached, a message is sent from the SSP 118 to the SCP 130. In response, the SCP 130 may connect the call to an intelligent peripheral 136. The intelligent peripheral 136 plays a message to the caller, instructing the caller how he or she may pay to extend the call. In such case, the caller may charge an additional call segment to a credit card or may pay by other means. If the user chooses not to pay for additional call time, the SCP 130 is notified and then may direct the SSP1 118 to initiate disconnection of the call. In determining whether to initiate disconnection of the call, the identity of the caller and his or her prior payment history may be considered. In an alternate operation, the SCP 130 may direct the SSP1 118 to send the switch to another resource supported by the SSP1 118.

In arming the disconnect function, the SCP 130 requests that the SSP1 118 notify the SCP 130 when the call has been disconnected by the subscriber prior to the timeout function being met. When the disconnect event detection point is reached (call is disconnected), the SSP1 118 reports to the SCP 130 the duration of the call. With the duration information, the SCP 130 can deduct the cost of the call from the prepaid card value or debit account value.

Operation according to the present invention supports Local Number Portability (LNP). Thus, in routing calls, the signaling network 104 must translate the DN or the Local Routing Number (LRN) into a Destination Point Code (DPC) that corresponds to one of the Ds 108-116. Minimal additional overhead is required to cause the DPCS to operate in conjunction with LNP.

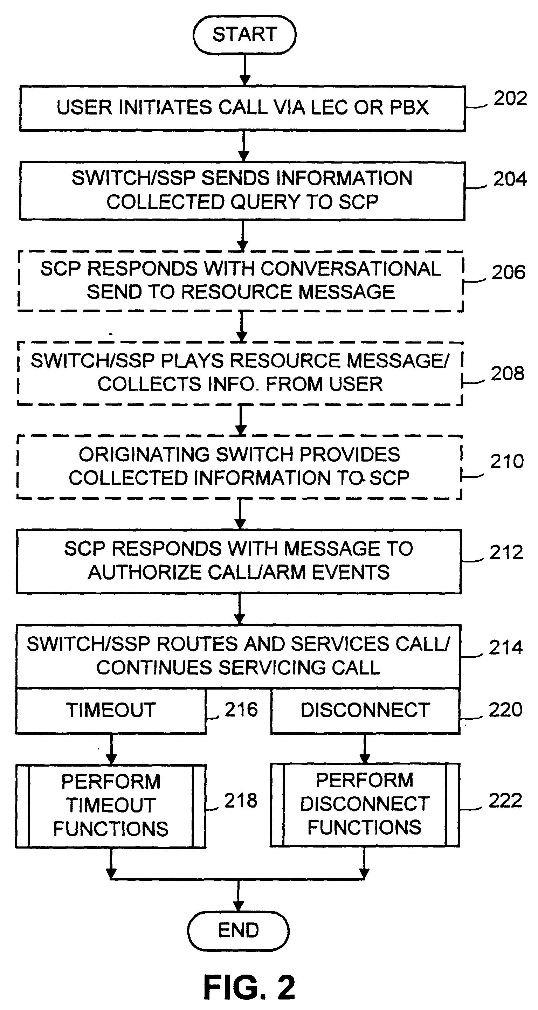

FIG. 2 is a logic diagram illustrating operation of a telephone network according to the present invention in servicing debit card/prepaid card services. In operation, a user first initiates a call to an originating switch 108 (step 202). The originating switch 108/coupled SSP 118 sends an information-collected query to the SCP 130 via the signaling network 104 (step 204). In the information collected query, the SSP 118 may send enough information (e.g., account, DN, etc.) for the SCP 130 to validate the transaction. However, if not enough information has been collected, the SCP 130 responds to the SSP 108 with an optional conversational Send_To_Resource message (step 206). In such case, the originating switch 108/coupled SSP 118 plays the resource message to the caller and collects information from the user (step 208). This information will allow the SCP 130 to service the debit card/prepaid card transaction and the telephone network to route the call to the desired destination (telephone 134). Further, in such case, after collecting the information, the SSP 118 provides the information to the SCP 130 (step 210).

Having received sufficient information to authorize the transaction, and having authorized the transaction, the SCP responds to the SSP 118 with a message authorizing the call and arming the timer and disconnect event detection points (step 212). The originating switch 108 and SSP 118 then route and service the call (step 214). If the call cannot be serviced to the called telephone 134, operation ends.

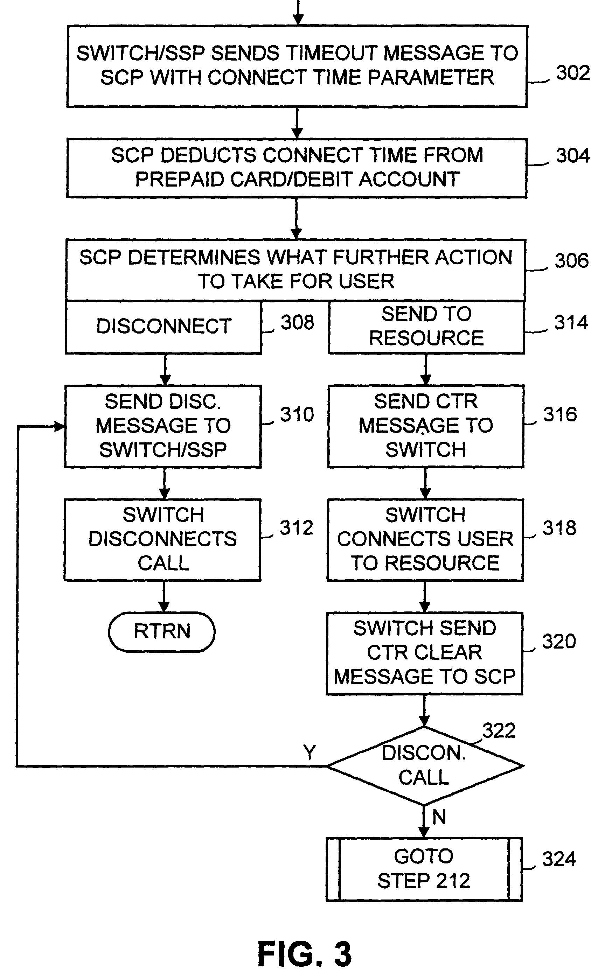

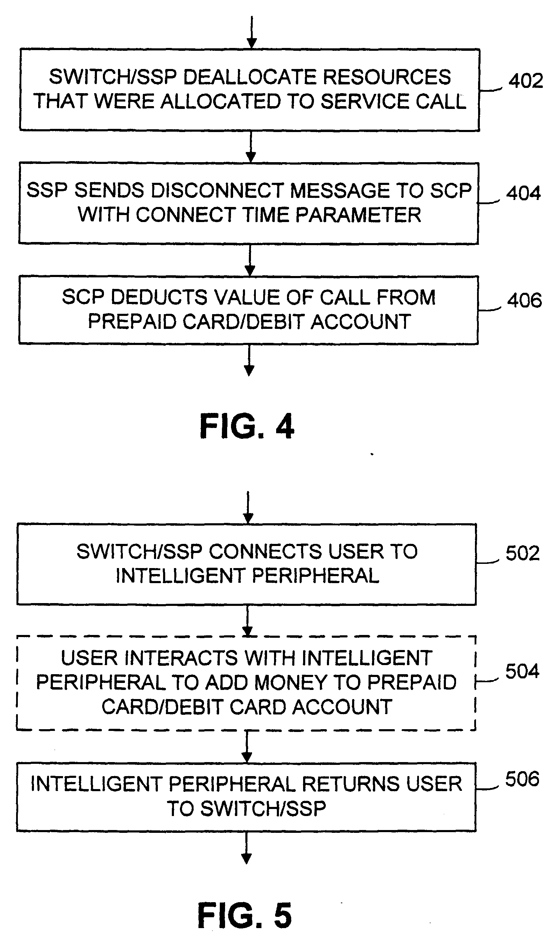

One of two possible operations can occur from step 214. If the timer timing out) meets the timer event detection point at step 216, timeout functions are performed (step 218). These timeout functions will be described with reference to FIG. 3. Alternately, if the call is disconnected before the timeout event detection point is met (step 222), disconnect functions are performed. These disconnect functions will be described with reference to FIG. 4. From both steps 218 and 222 operation ends.

FIG. 3 is a logic diagram illustrating operation of a telephone network according to the present invention in responding to a timeout event during call servicing. When a timeout event occurs, the serving switch 108/SSP 118 sends a timeout message to the SCP 130 with a connect time parameter contained therein (step 302). In response, the SCP 130 deducts the cost of the connect time from the prepaid card or debit card account, as the case may be (step 304). Then, the SCP 130 determines what further action should be taken for the particular user (step 306).

A first option that may be taken in response to the timeout event occurs when the call has consumed all resources for the prepaid card or debit card account and the SCP 130 determines that it will not further service the call (step 308). In such case, the SCP 130 sends a disconnect message to the SSP 118 (step 310) and the SSP 118/switch 108 disconnects the call (step 312). After the call is disconnected, operation ends.

A second option that may be taken in response to the timeout event occurs when the call has consumed all resources for the prepaid card or debit card account but the SCP 130 determines that the caller may desire to arrange for another payment option (step 314). In such case, the SCP 130 sends a Connect To Resource (CTR) message to the SSP 118 (step 316). In response, the SSP 118/switch 108 sends the caller (and potentially the called party) to a resource (step 318). This resource may be implemented by the switch 108/SSP 118. Alternatively, the intelligent peripheral 136 may service the resource. In such case, a connection is established with the intelligent peripheral 136. The intelligent peripheral may have the capability to service a credit card transaction (or other monetary transaction) that reactivates the prepaid card or that makes a deposit to the user's debit card account.

Once the connection to the resource has been serviced, the switch 108/SSP 118 sends a CTR clear message to the SCP 130, indicating the outcome of the connection to the resource (step 320). Based on the results received in the CTR clear message, the SCP 130 determines whether to disconnect the call (step 322). If the SCP 130 decides to continue servicing the call, operation returns to step 212 of FIG. 2 wherein timeout and disconnect events are reset and servicing of the call continues (step 324). However, if the SCP 130 determines that the call is to be disconnected, operation proceeds to step 310 wherein the disconnection operations proceed.

FIG. 4 is a logic diagram illustrating operation of a telephone network according to the present invention in responding to a disconnect event. When a disconnect event is detected by the SSP 118, the switch 108/SSP 118 deallocate resources that were allocated to service the call (step 402). Steps for deallocating resources are generally known. The SSP 118 also sends a disconnect message to the SCP 130 that includes a connect time parameter (step 404). One embodiment of this message is the O_Disconnect_EDP_Notification message. The connect time parameter in the embodiment provides the time that the call was connected since the last report to the SCP 130 from the SSP 118. In another embodiment, time stamps are passed from the SSP 118 to the SCP 130 for the call connection, timeout and disconnect events. In such case, the SCP 130 would be required to calculate the time that the call was serviced. The SCP 130 then uses this connect time parameter to deduct the value of the connect time (duration of call times the per-minute charge) from the prepaid card or the debit card account, as the case may be (step 406).

FIG. 5 is a logic diagram illustrating operation of a telephone network according to the present invention in sending a user to an intelligent peripheral after a timeout event has occurred during call servicing. As was previously discussed, the SCP 130 may send a user to an intelligent peripheral 136 in order to allow the user to add additional funds to his or her prepaid card or debit card account. Thus, the switch 108/SSP 118 connects the caller to the intelligent peripheral (step 502). In connecting the caller to the intelligent peripheral 136, the switch 108/SSP 118 may connect not only the caller but also the called party as well to the intelligent peripheral 136. Once connected to the intelligent peripheral 136, the caller (or called party) may interact with the intelligent peripheral 136 to add money to the prepaid card or debit card account (step 504). Once this interaction is complete, the intelligent peripheral 136 returns the caller (and the called party) to the switch 108/SSP 118.

FIG. 6 is a block diagram illustrating a signaling network element constructed according to the present invention. The signaling network element (SNE) 600 may be an SSP or a SCP. In either of these embodiments, the SNE 600 is a digital device and includes a processor 602, memory 604, storage 606, an Interface 608 and an Input/Output 610. These devices are intercoupled via a communication path that may be a bus.

The processor 602 may be one or more processing devices that are selected to accomplish the DPCS functions according to the present invention as well as other functions required of the SNE 600. The memory 604 stores instructions and data and may be Dynamic Random Access Memory, Static Random Access Memory or other memory that is usable by the processor 602 during its ongoing operations. The storage 606 provides the SNE 600 with long term storage of data and instructions and may be magnetic disk storage, optical storage, tape storage or other long term storage devices.

The Interface 608 couples the SNE 600 to other elements of the signaling network including other SSPs, SCPs, STPs and intelligent peripherals. Since the signaling network is packet switched, the Interface 608 supports packet switching operations supported by the signaling network. Finally, the SNE 600 includes a user Input/Output interface that interfaces the SNE 600 to a user. Such interface may couple the SNE 600 to a console (either locally or remotely) to allow a user to program and modify operations of the SNE 600.

The DPCS functions of the SNE 600, in one embodiment, are accomplished by the processing of a set of software instructions that are stored in the SNE 600. These software instructions 612 are stored in the storage 606 and are loaded into the memory 604 (as instructions 614) so that the processor 602 may selectively execute them. In executing these software instructions, the processor 602 uses the Interface 608 to interact with coupled SSPs, STPs, SCPs and intelligent peripherals. These operations have been previously described with reference to FIGs. 1 through 5. In another embodiment, at least some of the operations are performed by dedicated hardware components that have been pre-programmed or pre-wired to perform the operations.

FIG. 7 is a block diagram illustrating a digital telephone switch 700 constructed according to the present invention. The construction of the switch 700 is similar to that of the SNE 600. Thus, those components previously discussed retain common numbering convention and will not be discussed again with reference to FIG. 7. The switch 700, however, also includes a time switch 702 that performs time based switching operations to couple a plurality of users to the traffic network. The construction of digital switches is generally known.

According to the present invention, the digital switch 700 also performs DPCS functions. In performing these DPCS functions, the digital switch 700 performs operations based upon instructions 612 stored in the storage 612 and loaded into memory 604 as instructions 614 that are executed by the processor 602. In another embodiment, at least some of the operations are performed by dedicated hardware components that have been pre-programmed or pre-wired to perform the operations. Interaction with the signaling network is performed via interface 608. Calls are routed between users and the traffic network via the time switch 702.

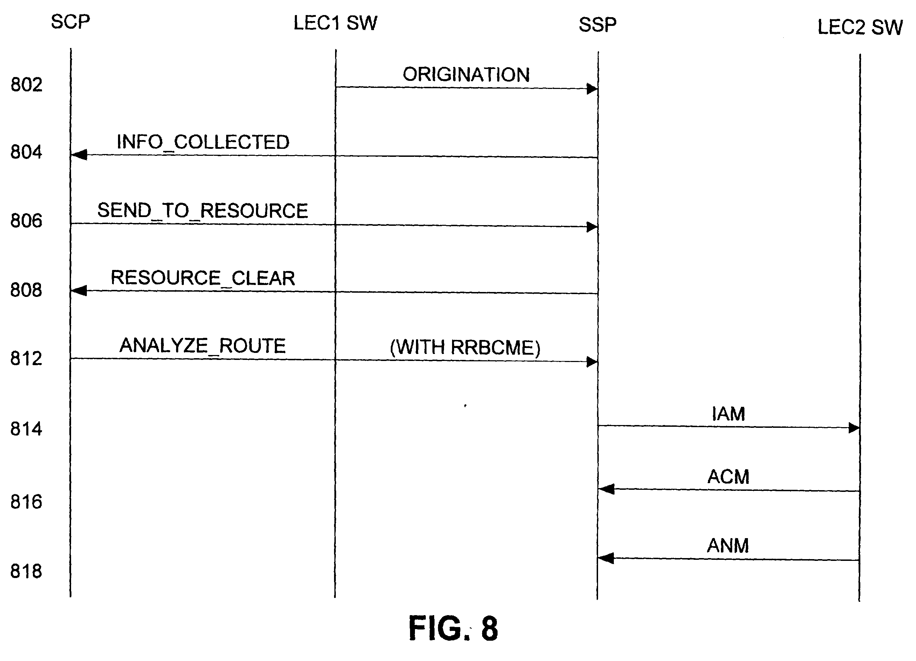

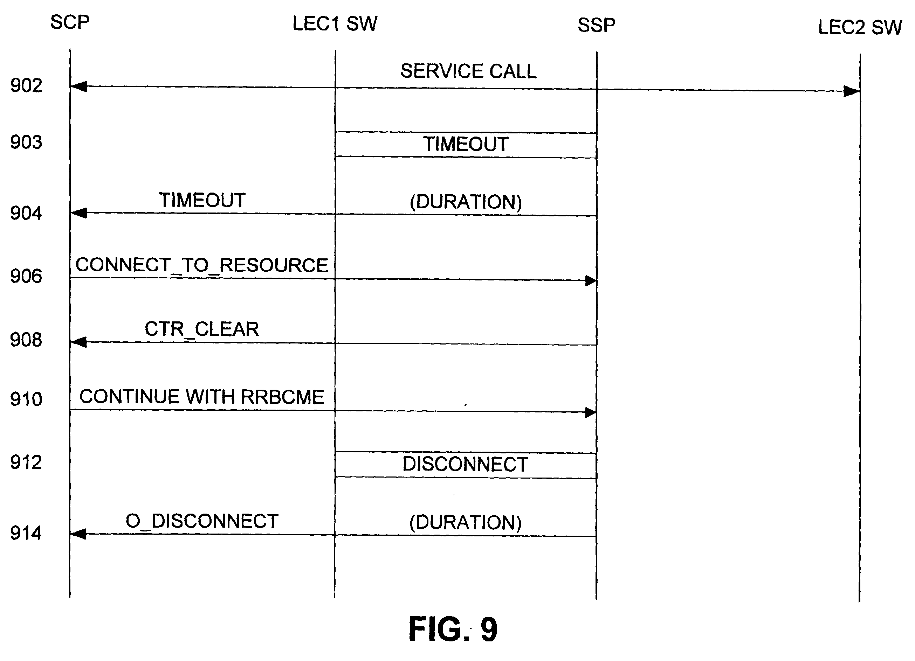

FIGs. 8 and 9 are message flow diagrams illustrating an example of operation according to the present invention in servicing a debit card/prepaid card call. In the example, a caller is coupled to Local Exchange Carrier 1 (LEC1) switch while the called party is coupled to Local Exchange Carrier 2 (LEC2) switch. In the example, NetworkBuilder, a utility provided and supported by Nortel Networks, gives local and long-distance service providers the means to implement AIN throughout their network, permitting the design and development of customer services on SCPs of their choice, independent of their network switching infrastructure. In the example, Event Detection Points (EDPs) are implemented for Timeout and O_Disconnect functions, these functions allowing the telephone network components to track the duration of calls and to provide the described signaling.

In the example, a subscriber originates a call at 802 and, in response, the originating digital switch of LEC1 sends an Origination Message to a serving SSP. The subscriber accesses debit card/prepaid card services by dialing an N00 number (e.g., a toll-free number, local access number, etc.) allocated for such services. In FIG. 8, only a single SSP is shown. However, the SSP generally represents all SSPs serving digital switches for LEC1 and LEC2. In response, the digital switch originating the call evaluates the Shared_Interoffice_Trunk trigger and, at 804, the SSP sends an Info_Collected query to the SCP. If insufficient information is contained in the Info_Collected message to process the transaction, the SCP responds with a conversational Send_To_Resource message requesting validation digits from the subscriber at 806. In such case, the switch plays the specified resource, collects digits from the subscriber and reports them to the SCP in a Resource_Clear message at 808.

At 812, the SCP replies to the Resource_Clear and Info_Analyzed message with a conversational package containing an Analyze_Route message that includes a Request_Report_BCM_Event (RRBCME) component. The Request_Report_BCM_Event, upon receipt by the SSP, arms the Timeout and O_Disconnect EDP events. The SCP should also include a TimeoutTimer parameter in the Request_Report_BCM_Event containing the amount of time left on the subscribers prepaid card or debit card. The switch and SSP then route the call to a called party. In routing the call, an IAM is sent to a destination switch at 814, the destination switch responds with an ACM at 816. If the called party answers, the destination switch then responds with an ANM at 818.

Referring now to FIG. 9, the call is serviced at 902. According to the present invention, the timeout timer is started when servicing of the call commences. When timeout timer expires at 903, the originating switch sends a Timeout EDP_Request to the SCP at 904. The Timeout EDP_Request indicates that the TimeoutTimer has expired prior to disconnection of the call and includes the duration of the call (since a last timeout event in the call). The SCP receives the message and deducts the value of the call's duration from the value of the prepaid card or debit account. Further, at 906, the SCP may respond with a Connect_To_Resource (CTR) message in a conversation package. In another operation, as described with reference to FIG. 3, the SCP may simply direct the SSP to disconnect the call.

If the SCP sends a CTR message to the SSP, the SSP of the originating switch, responding to the CTR message, connects the caller and/or the called party to the specified resource. Once the resource is completed, the SSP of the originating switch sends a conversational CTR_Clear message to the SCP at 908. Based upon the contents of the CTR_Clear message, the SCP decides to allow the call to continue and sends a conversation package to the SSP of the serving switch which contains a continue operation message and an RRBCME message at 910. These messages cause the SSP to reset the TimeoutTimer and allow the called parties to remain connected. The call continues until the TimeoutTimer times out again and, at 912, the SSP sends a Timeout EDP_Request to the SCP, indicating that the TimeoutTimer has expired prior to disconnection of the call.

In another operation according to the present invention, the call is disconnected prior to expiration of the timer. A disconnect event may occur prior to a first expiration of the timer or after the timer has been reset one or more times. Thus, the disconnect operations are not dependent upon the events of 903 through 910. Upon a disconnect event at 912, the SCP sends the SSP an O_ Disconnect message at 914. The O_Disconnect message contains the connect time (duration) for the call (or most recent call segment). The SCP uses this connect time to deduct the cost of the call from the debit card/prepaid card account.

The invention disclosed herein is susceptible to various modifications and alternative forms. Specific embodiments therefor have been shown by way of example in the drawings and detailed description. It should be understood, however, that the drawings and detailed description thereto are not intended to limit the invention to the particular form disclosed, but on the contrary, the invention is to cover all modifications, equivalents and alternatives falling within the spirit and scope of the present invention as defined by the claims.

## Claims

1. In a telephone network including a traffic network and a signaling network, a method for servicing a debit card/prepaid card transaction comprising:
receiving a request from a subscriber at a switch of the traffic network, the request to service a call in a debit card/prepaid card transaction;
validating the debit card/prepaid card transaction at a service control point of the signaling network;
completing the call from the subscriber to a called party;
setting a timer in the switch that starts upon completion of the call and expires based upon a timeout timer parameter; and
when the timer in the switch expires, sending a timeout message to the service control point that includes a connect time for the call.

2. The method of claim 1, further comprising:
when the call is disconnected, sending a disconnect message to the service control point that includes a connect time for the call; and
deducting the cost of the call from the debit card/prepaid card, the cost of the call determined based upon the connect time.

3. The method of claim 1, further comprising:
deducting the cost of the call from the debit card/prepaid card, the cost of the call determined based upon the connect time; and
connecting the subscriber to a resource that allows the subscriber to arrange for additional payment.

4. The method of claim 3, further comprising:
resetting the timer in the switch based upon the additional payment; and
continuing to service the call.

5. In a telephone network having a traffic network and a signaling network, a method for operating a service control point comprising:
receiving a request from a switch, the request indicating that a subscriber requests the completion of a call using a debit card/prepaid card transaction;
validating the debit card/prepaid card transaction;
directing the switch to complete the call from the subscriber to a called party;
providing a timeout timer parameter to the switch;
directing the switch to set a timer that starts upon completion of the call and expires based upon the timeout timer parameter; and
when the timer in the originating switch expires, receiving a timeout message from the switch that includes a connect time for the call.

6. The method of claim 5 or the method of claim 1, further comprising deducting the cost of the call from the debit card/prepaid card, the cost of the call determined based upon the connect time.

7. The method of claim 5, further comprising:
receiving a disconnect message from the switch for the call, the disconnect message including a connect time for the call; and
deducting the cost of the call from the debit card/prepaid card, the cost of the call determined based upon the connect time.

8. The method of claim 5, further comprising:
deducting the cost of the call from the debit card/prepaid card, the cost of the call determined based upon the connect time; and
directing the switch to connect the subscriber to a resource that allows the subscriber to arrange for additional payment.

9. The method of claim 8, further comprising directing the switch to reset the timer using a new timeout timer parameter based upon the additional payment.

10. In a telephone network having a traffic network and a signaling network, a method for operating a switch comprising:
receiving a request from a subscriber to complete a call using a debit card/prepaid card transaction;
sending a message to a service control point regarding the debit card/prepaid card transaction;
receiving a direction from the service control point to complete the call from the subscriber to a called party;
receiving a direction from the service control point to set a timer that starts upon completion of the call and expires based upon a timeout timer parameter received from the service control point; and
when the timer expires, sending a timeout message to the service control point that includes a connect time for the call.

11. The method of claim 10, further comprising:
receiving an instruction from the service control point to connect the subscriber to a resource that allows the subscriber to arrange for additional payment; and
connecting the subscriber to the resource.

12. The method of claim 10, further comprising:
continuing to service the call;
receiving a new timeout timer parameter from the service control point;
resetting the timer based upon the new timeout timer parameter.

13. For operation within a signaling network that manages operation of a traffic network having a plurality of intercoupled switches, a service control point comprising:
a signaling network interface that interfaces the service control point to other signaling network elements;
a processor adapted to execute instructions and to operate upon data; and
memory adapted to store instructions and data, the memory storing instructions that cause the service control point to:
receive a request from a switch that indicates that a subscriber requests the completion of a call using a debit card/prepaid card transaction;
validate the debit card/prepaid card transaction;
direct the switch to complete the call from the subscriber to a called party;
provide a timeout timer parameter to the switch;
direct the switch to set a timer that starts upon completion of the call and expires based upon the timeout timer parameter; and
when the timer in the originating switch expires, receive a timeout message from the switch that includes a connect time for the call.

14. The service control point of claim 3, wherein the instructions further cause the service control point to direct the switch to reset the timer using a new timeout timer parameter based upon the additional payment.

15. The service control point of claim 13 or the method of claim 5 or claim 1, wherein the timeout timer parameter is based upon the value of the debit card/prepaid card.

16. A telephone switch that routes calls and that interfaces with a signaling network via a signal switching point, telephone switch comprising:
a time switch through which calls are routed;
a signaling network interface that interfaces the switch to the signaling network;
a processor adapted to execute instructions and to operate upon data; and
memory adapted to store instructions and data, the memory storing instructions that cause the service control point to:
receive a request from a subscriber to complete a call using a debit card/prepaid card transaction;
send a message to a service control point regarding the debit card/prepaid card transaction;
receive a direction from the service control point to complete the call from the subscriber to a called party;
receive a direction from the service control point to set a timer that starts upon completion of the call and expires based upon a timeout timer parameter received from the service control point; and
when the timer expires, send a timeout message to the service control point that includes a connect time for the call.

17. The telephone switch of claim 16, wherein the instructions further cause the telephone switch to:
receive an instruction from the service control point to connect the subscriber to a resource that allows the subscriber to arrange for additional payment; and
connect the subscriber to the resource.

18. The telephone switch of claim 16, wherein the instructions further cause the telephone switch to:
continue to service the call;
receive a new timeout timer parameter from the service control point;
reset the timer based upon the new timeout timer parameter.

19. A computer readable medium including a plurality of instructions that are executable by a service control point in a telephone network having a traffic network and a signaling network, the computer readable medium comprising:
a plurality of instructions that cause the service control point to receive a request from a switch that indicates that a subscriber requests the completion of a call using a debit card/prepaid card transaction;
a plurality of instructions that cause the service control point to validate the debit card/prepaid card transaction;
a plurality of instructions that cause the service control point to direct the switch to complete the call from the subscriber to a called party;
a plurality of instructions that cause the service control point to provide a timeout timer parameter to the switch;
a plurality of instructions that cause the service control point to direct the switch to set a timer that starts upon completion of the call and expires based upon the timeout timer parameter; and
a plurality of instructions that cause the service control point to, when the timer in the originating switch expires, receive a timeout message from the switch that includes a connect time for the call.

20. The computer readable medium of claim 19 or the service control point of claim 13, where the instructions further cause the service control point to deduct the cost of the call from the debit card/prepaid card, the cost of the call determined based upon the connect time.

21. The computer readable medium of claim 19 or the service control point of claim 13,wherein the instructions further cause the service control point to receive a disconnect message from the switch for the call, the disconnect message including a connect time for the call; and
deduct the cost of the call from the debit card/prepaid card, the cost of the call determined based upon the connect time.

22. The computer readable medium of claim 19 or the service control point of claim 13,wherein the instructions further cause the service control point to deduct the cost of the call from the debit card/prepaid card, the cost of the call determined based upon the connect time; and
direct the switch to connect the subscriber to a resource that allows the subscriber to arrange for additional payment.

23. A computer readable medium including a plurality of instructions that are executable by telephone switch, the computer readable medium comprising:
a plurality of instructions that cause the telephone switch to receive a request from a subscriber to complete a call using a debit card/prepaid card transaction;
a plurality of instructions that cause the telephone switch to send a message to a service control point regarding the debit card/prepaid card transaction;
a plurality of instructions that cause the telephone switch to receive a direction from the service control point to complete the call from the subscriber to a called party;
a plurality of instructions that cause the telephone switch to receive a direction from the service control point to set a timer that starts upon completion of the call and expires based upon a timeout timer parameter received from the service control point; and
a plurality of instructions that cause the telephone switch to, when the timer expires, send a timeout message to the service control point that includes a connect time for the call.

24. The computer readable medium of claim 23, further comprising:
a plurality of instructions that cause the telephone switch to receive an instruction from the service control point to connect the subscriber to a resource that allows the subscriber to arrange for additional payment; and
a plurality of instructions that cause the telephone switch to connect the subscriber to the resource.

25. The computer readable medium of claim 23, further comprising:
a plurality of instructions that cause the telephone switch to continue to service the call;
a plurality of instructions that cause the telephone switch to receive a new timeout timer parameter from the service control point; and
a plurality of instructions that cause the telephone switch to reset the timer based upon the new timeout timer parameter.

26. A message sent in a telephone network from a service control point that causes a timer event to be sent in a switch for managing a prepaid card/debit card transaction, the message comprising:
a message header used for routing the message from the service control point to the switch;
a message identifier that identifies the message; and
a message body that identifies the prepaid card/debit card transaction and directs the switch to set a timer event for the prepaid card/debit card transaction and to send a timeout message to the service control point upon expiration of the timer.

27. A message sent in a telephone network from a switch to a service control point that notifies the service control point that a timeout event has occurred in a prepaid card/debit card transaction, the message comprising:
a message header used for routing the message from the service control point to the switch;
a message identifier that identifies the message; and
a message body that identifies the prepaid card/debit card transaction, that notifies the service control point that the timeout event has occurred and that notifies the service control point of a duration of a corresponding call.

28. A message sent in a telephone network from a switch to a service control point that notifies the service control point that a disconnection has occurred in a prepaid card/debit card transaction, the message comprising:
a message header used for routing the message from the service control point to the switch;
a message identifier that identifies the message; and
a message body that identifies the prepaid card/debit card transaction, that notifies the service control point that the disconnection has occurred and that notifies the service control point of a duration of a corresponding call. service control point of a duration of a corresponding call.

29. A message sent in a telephone network from a service control point to a switch in response to a connect to resource clear message that notifies the switch to continue a prepaid card/debit card call, the message comprising:
a message header used for routing the message from the service control point to the switch;
a message identifier that identifies the message; and
a message body that identifies the prepaid card/debit card call and that directs the switch to continue the prepaid card/debit card call.
